# EUROPÄISCHE PATENTSCHRIFT

(11) **EP 1 925 575 B1**
(45) Veröffentlichungstag und Bekanntmachung des Hinweises auf die Patenterteilung: **02.06.2010**
(21) Anmeldenummer: 07405330.7
(22) Anmeldetag: 22.11.2007
(51) Int. Cl.: B65G 15/14, B29C 49/42

(54) **Fördermittel und automatische Transportstrecke für zylindrische Körper**
Conveyor device and automatic transport section for cylindrical bodies
Organe convoyeur et section de transport automatique pour corps cylindrique

(30) Priorität: 27.11.2006 CH 19072006
(43) Veröffentlichungstag der Anmeldung: 28.05.2008
(73) Patentinhaber: M. Tanner AG, 8308 Illnau (CH)
(72) Erfinder: Tanner, Marcel, 8303 Bassersdorf (CH)
(74) Vertreter: Bruderer, Werner

(56) Entgegenhaltungen:
- JP-A- 2000 168 945
- US-A- 5 853 080

## Beschreibung

Die Erfindung betrifft ein Fördermittel für zylindrische Körper, wie Vorformlinge für Hohlkörper, welche mindestens einen Kragen aufweisen, in einer Transportstrecke, wobei das Fördermittel ein umlaufendes Förderelement umfasst und die zylindrischen Körper durch das Förderelement an zwei gegenüberliegenden Seiten geführt werden, sowie eine automatische Transportstrecke zum Fördern von zylindrischen Körpern, wie Vorformlinge, welche mindestens einen Kragen aufweisen, zwischen einer Beschickungseinrichtung für ungeordnete zylindrische Körper und einer Übernahmeeinrichtung für die zylindrischen Körper, mit mindestens einer zusätzlichen Einrichtung zur Kontrolle oder für andere Behandlungsmassnahmen an den zylindrischen Körpern, wobei diese Einrichtung zwischen der Beschickungseinrichtung und der Übernahmeeinrichtung angeordnet ist.

Fördermittel für zylindrische Körper, wie Vorformlinge und automatische Transportstrecken in Produktionsstrassen zum Fördern von zylindrischen Körpern, wie z.B. rohrförmige Vorformlinge, sind in verschiedenen Ausführungen vorbekannt, beispielsweise aus EP 0 377 353. Aus diesem Dokument ist eine automatisierte Fertigungsstrasse zum Herstellen von Hohlkörpern aus zylindrischen Körpern, insbesondere rohrförmigen thermoplastischen Vorformlingen bekannt. Die Vorformlinge sind an einem Ende offen und weisen an diesem Endbereich mindestens einen ringförmigen Kragen und eventuell weitere Kragen sowie einen Gewindestutzen auf. In der Produktionsstrasse müssen die Vorformlinge von einer Beschickungseinrichtung für ungeordnete Vorformlinge zu einer Formgebungseinrichtung, in diesem Falle zum Blasformen, der fertigen Produkte gefördert werden. Zwischen den beiden Einrichtungen zur Aufgabe der Vorformlinge auf ein Fördermittel und zu deren Übernahme von einem Fördermittel sind weitere Zusatzeinrichtungen angeordnet, beispielsweise Kontrolleinrichtungen, Reinigungseinrichtungen und/oder eine Heizvorrichtung. An der Beschickungseinrichtung werden die Vorformlinge in an sich bekannter Weise vereinzelt und in eine etwa vertikale Lage gebracht. Die Vorformlinge liegen dabei mit dem ringförmigen Kragen auf zwei Gleitschienen auf, welche mit Abstand zueinander angeordnet sind. Durch die Schwerkraft hängen die Vorformlinge in diesem Zwischenraum an den Gleitschienen. Sie sind dabei weder in ihrer Lage festgelegt, noch weisen sie die in den Bearbeitungsstationen notwendigen Abstände zueinander auf. Die Vorformlinge werden auch nicht zwangsweise durch die Anlage gefördert, da zwischen den Einrichtungen keine angetriebenen Fördermittel vorhanden sind. Um die Vorformlinge von der Beschickungseinrichtung in Richtung der weiteren Einrichtungen zu bewegen, sind die Gleitschienen schräg angeordnet, so dass sich die Vorformlinge durch die Schwerkraft in Richtung der Folgeeinrichtung bewegen. Beim Eintritt in eine der Zusatzeinrichtungen oder die Formgebungseinrichtung müssen die Vorformlinge von Positioniereinrichtungen sowie Transporteinrichtungen übernommen werden, damit die entsprechenden Bearbeitungsprozesse korrekt durchgeführt werden können. Beim Austritt aus der Zusatzeinrichtung müssen die Vorformlinge wieder auf den Gleitschienen abgelegt werden und werden dann durch die nachfolgenden Vorformlinge weiter durch die Produktionsstrasse gestossen. Diese bekannte Anordnung erfordert mehrere voneinander getrennte zusätzliche Transport- und Positioniereinrichtungen, welche durch aufwendige Steuerungen miteinander verbunden und aufeinander abgestimmt sein müssen. Zudem ist das Verschieben der Vorformlinge auf den Gleitschienen durch die Schwerkraft und/oder durch die nachgestossenen, bzw. nachfolgenden Vorformlinge störungsanfällig und führt immer wieder zu Unterbrüchen an den Fördermitteln und damit zu Stillständen der Produktionsstrasse. Mit den hier beschriebenen Fördermitteln ist es auch nicht möglich, die Vorformlinge schräg oder vertikal nach oben zu fördern.

Aus DE 2 314 794 sind weitere Fördermittel für derartige Produktionsstrassen bekannt, mit welchen Körper beliebiger Form, z.B. zylindrische Körper in der Form von Flaschen, auch schräg oder vertikal nach oben gefördert werden können. Diese Fördermittel bestehen aus einem Kettenförderer mit zwei parallelen Kettenbändern, welche mit Abstand zueinander angeordnet sind. Die Kettenglieder der beiden Kettenbänder sind mit elastischen Mitnehmerelementen ausgestattet, welche Lamellen aufweisen. Die zylindrischen Körper werden zwischen diese beiden Kettenbänder eingelegt und durch die Lamellen gehalten. Sie sind jedoch weder in der Lage ihrer Längsachse noch in ihrem Abstand zueinander festgelegt. Es ist bekannt, derartige Kettenförderer auch bei Produktionsstrassen mit Vorformlingen zur Herstellung von Hohlkörpern einzusetzen. An der Formgebungseinrichtung und an allfälligen Zusatzeinrichtungen, z. B. einer Messeinrichtung oder einer Reinigungseinrichtung, müssen aber auch bei diesem Fördermittel Übernahme- und Transporteinrichtungen angeordnet werden, welche die Vorformlinge im richtigen Abstand vom Fördermittel übernehmen, in der richtigen Lage und Position ihrer Längsachse festhalten und durch die Zusatzeinrichtung fördern. An der Austrittseite der Zusatzeinrichtung müssen die Vorformlinge wieder an ein weiteres Fördermittel übergeben werden. Auch bei diesem Fördermittel sind somit aufwendige Zusatzgeräte für das Positionieren, Festhalten und Transportieren der Vorformlinge sowie entsprechende Steuerungen notwendig. In den Übergangsbereichen zwischen Fördermittel und Zusatzeinrichtungen können oft Störungen auftreten. Eine direkte Übergabe der Vorformlinge an die. Formgebungseinrichtung ist nicht möglich. Die Vorformlinge müssen auch hier durch Zusatzgeräte richtig ausgerichtet und im richtigen Abstand zueinander angeordnet werden, was einen entsprechenden Mehraufwand erforderlich macht. Zudem bestehen die Kettenbänder aus vielen Einzelteilen mit Verbindungselementen, was sie störungsanfällig macht. Die Elemente müssen geschmiert sein, was zu erheblichen Verschmutzungen und entsprechendem Reinigungsaufwand führt. Aber auch die geförderten Teile können verschmutzt werden.

US 5 853 080 zeigt ein Fördermittel für Flaschen, welches als Förderelemente zwei umlaufende Riemen in der Form von zwei flexiblen Profilsträngen aufweist. Im Führungsbereich für die Flaschen verlaufen die beiden Profilstränge parallel und sind mit Abstand zueinander angeordnet. An der gegen die Flaschen gerichteten Seite der Profilstränge ist eine Nute ausgebildet, in welche ein Kragen an den Flaschen eingreift. Die Profilstränge werden in Halteblöcken geführt, welche starr an einer Rahmeneinrichtung des Fördermittels gehalten sind. In diesen Halteblöcken sind Kanäle eingearbeitet, welche dem Querschnittprofil der Profilstränge entsprechen. Die Profilstränge sind gleitend in diesen Kanälen geführt und sind somit immer der Belastung von Gleitreibung ausgesetzt. Besonders negativ wirkt sich dieses Reibungsproblem in den Bereichen aus, wo die Profilstränge umgelenkt und zurückgeführt werden. Bei der Umlenkung in einem Bogen, z.B. um 180°, treten sehr hohe Kräfte in Richtung des Zentrums des Bogens auf und die Reibungskräfte werden sehr gross. Aber auch das Einlegen der Profilstränge in die Halteblöcke ist mit Schwierigkeiten und grossem Aufwand verbunden. Die Halteblöcke müssen dazu auseinander genommen werden und nach dem Einlegen des Profilstranges wieder zusammengeschraubt werden. Dieser Vorgang ist auch notwendig, wenn defekte Profilstränge ersetzt werden müssen. Im Weiteren können die Förderelemente in der Form der zwei flexiblen Profilstränge nur in einer Ebene angeordnet werden, und eine Umlenkung aus dieser Ebene ist nicht möglich. Für die Förderung von Hohlkörpern wie zum Beispiel Vorformlingen, welche mit hohen Geschwindigkeiten gefördert werden müssen, ist dieses Fördermittel nicht geeignet. Bei hohen Geschwindigkeiten sind die Reibung und der Verschleiss an den Profilsträngen zu gross.

Es ist Aufgabe der vorliegenden Erfindung, ein Fördermittel zu schaffen, welches zylindrische Körper mit mindestens einem Kragen in einfacher Weise in der richtigen Position und Ausrichtung sowie im richtigen Abstand zueinander übernehmen kann, welches die Position und Ausrichtung der zylindrischen Körper gegenüber dem Fördermittel während des ganzen Transportvorganges, bzw. über die ganze Transportstrecke beibehält und sicherstellt, mit welchem die zylindrischen Körper sowohl horizontal, schräg, wie auch vertikal gefördert werden können, mit welchem die zylindrischen Körper ohne zusätzliche Positionier- und Transporteinrichtungen durch die Zusatzeinrichtungen geführt werden können und welches in einfacher Weise an unterschiedliche Formen und Abmessungen der zylindrischen Körper angepasst werden kann. Im Weiteren ist es Aufgabe der Erfindung, eine automatische Förderstrecke zum Fördern von zylindrischen Körpern wie rohrförmige Vorformlinge zu schaffen, bei welcher im Bereiche von zusätzlichen Einrichtungen neben dem Fördermittel keine zusätzlichen Transport- und Positioniereinrichtungen notwendig sind, in welcher die zylindrischen Körper zwischen der Beschickungseinrichtung und der Übernahmeeinrichtung keine zusätzlichen Übergabe- oder Handhabungsstationen durchlaufen, bei welcher in einfacher Weise eine oder mehrere Zusatzeinrichtungen in die Förderstrecke eingefügt werden können und diese Zusatzeinrichtungen einfacher und kostengünstiger aufgebaut sein können. Das Fördermittel und die Förderstrecke sollen eine reduzierte Verschmutzungsgefahr und weniger bewegliche Teile aufweisen und das Wenden von Körpern mit Hohlraum um 180° bzw. 360° ermöglichen, um Fremdpartikel auszuleeren.

Diese Aufgabe wird durch die im kennzeichnenden Teil der Patentansprüche 1 sowie 14 definierten Merkmale gelöst. Vorteilhafte Weiterbildungen der Erfindung ergeben sich nach den Merkmalen der abhängigen Patentansprüche.

Das erfindungsgemässe Fördermittel umfasst ein Förderelement in der Form eines Riemenförderers, welcher aus zwei flexiblen Profilsträngen mit einem elastischen Aussenmantel besteht, wobei jeder dieser Profilstränge als Endlosstrang ausgebildet ist. Die beiden Profilstränge verlaufen im Führungsbereich für die zylindrischen Körper parallel zueinander und sind mit einem Zwischenraum zueinander angeordnet, und an den beiden Profilsträngen ist mindestens an der gegen den Zwischenraum gerichteten Seite des Mantels je eine Führungsnute ausgebildet, welche parallel zur Längsachse des Profils verläuft und in welcher Teilbereiche der Kragen der zylindrischen Körper festlegbar sind. Durch diese Ausgestaltung des Fördermittels mit den erfindungsgemässen Profilsträngen können die zylindrischen Körper, z.B. Flaschen oder Vorformlinge zwischen den beiden Profilsträngen elastisch eingespannt werden, und durch die Führung der Kragen der zylindrischen Körper in den Nuten an den Profilsträngen werden gleichzeitig die Achsen der zylindrischen Körper in Bezug auf die Längsachse der Profilstränge genau ausgerichtet und in dieser Position festgelegt. Im Normalfall stehen die Achsen der zylindrischen Körper etwa rechtwinklig zur Längsachse der Profilstränge. In vorteilhafter Weise werden die zylindrischen Körper im Zwischenraum zwischen den beiden Profilsträngen gehalten und ein Teilbereich des Kragens der zylindrischen Körper greift in die Nuten ein und gleichzeitig ist ein an den Kragen angrenzender Teilbereich der zylindrischen Körper zwischen den gegenüberliegenden Seitenflächen der Profilstränge gehalten. Als Folge der Elastizität der Profilstränge werden nicht nur die Kragen in den Nuten gehalten, sondern auch die an die Kragen angrenzenden Bereiche der zylindrischen Körper bei Vorformlingen, z.B. weitere Kragen oder Gewindestutzen, werden zwischen den gegeneinander gerichteten Mantelflächen der Profilstränge elastisch festgelegt. Die zylindrischen Körper können von Anfang an im richtigen Abstand zueinander zwischen die Profilstränge eingelegt werden und dieser Abstand verändert sich während des Transportes, beispielsweise durch eine Förderstrecke einer Produktionsstrasse, nicht. Dies führt zum weiteren Vorteil, dass die zylindrischen Körper beim Transport durch zusätzliche Bearbeitungseinrichtungen, wie beispielsweise Messeinrichtungen oder lonisier-/Reinigungseinrichtungen, nicht mehr durch zusätzliche Einrichtungen vereinzelt und in die richtige Position gebracht werden müssen, sondern bereits auf dem erfindungsgemässen Fördermittel in der richtigen Position und im richtigen Abstand zueinander angeordnet und festgehalten sind. Dies führt zu einer wesentlichen Vereinfachung der Maschinenanordnungen und zu einer geringeren Störungsanfälligkeit. Der Riemenförderer mit den zwei Profilsträngen weist keine Scharniere und Gelenke auf und bedarf deshalb keiner Schmiermittel. Die entsprechende Verschmutzungsgefahr kann vollständig vermieden werden.

Besondere Vorteile ergeben sich, wenn der Querschnitt der Profilstränge symmetrisch ausgebildet ist und mehrere Nuten angeordnet werden. Bei der Anordnung von zwei sich gegenüberliegenden Nuten, d.h. an zwei sich gegenüberliegenden Seitenflächen, kann die vom Zwischenraum zwischen den Profilsträngen weg gerichtete Nute mit Führungs- und Umlenkelementen zusammenwirken, welche teilweise in diese Nute eingreifen. In zweckmässiger Weise wirken dabei die Profilstränge mit Führungs- und Umlenkrollen zusammen, welche am Mantel einen radialen Kragen aufweisen und wobei dieser Kragen mindestens teilweise in eine der Führungsnuten an einem Profilstrang eingreift. Bei symmetrischer Ausgestaltung des Querschnitts der Profilstränge ergibt sich somit ein Mehrfachnutzen und die Flexibilitätseigenschaften der Profilstränge werden verbessert. Eine vorteilhafte Ausbildung des Erfindungsgegenstandes sieht vor, dass die Profilstränge einen etwa quadratischen Querschnitt aufweisen und an jeder der vier Seitenflächen eine Nute ausgebildet ist. Durch diese Ausgestaltung werden Anordnungen von Umlenkrollen in rechtwinklig zueinander stehenden Ebenen ermöglicht und das Fördermittel kann dadurch in Laufrichtung im Raum umgelenkt werden. Gleichzeitig wird auch die Führung der Profilstränge in Führungsprofilen ermöglicht, was zusätzliche Gestaltungsanordnungen zulässt.

In zweckmässiger Weise wird nicht nur der Aussenmantel der Profilstränge aus einem elastischen Material gebildet, sondern es wird das gleiche elastische Material über den gesamten Querschnitt eingesetzt. Als besonders zweckmässige Materialien erweisen sich dabei Kunststoffe aus der Gruppe der Polyurethane. Aus diesen Materialien können in an sich bekannter Weise sehr gut Profilstränge extrudiert werden, wobei auch andere geeignete Kunststoffe verwendet werden können. Die Anordnung eines längsgerichteten Kernes zur Zugentlastung in den Profilsträngen führt zu weiteren Vorteilen, da bei dieser Ausgestaltung grössere Kräfte übertragen werden können und/oder längere Endlosstränge erstellt werden können. Derartige längsgerichtete Kerne können beispielsweise in an sich bekannter Weise aus einem Kabel aus Stahldrähten, Polyesterfasen oder Kevlarfasern gebildet sein.

Eine zweckmässige Ausgestaltung des Erfindungsgegenstandes sieht vor, dass die Profilstränge in Teilbereichen in Führungsprofilen geführt sind. Bei diesen Führungsprofilen kann es sich beispielsweise um C-förmige Profile handeln, welche die Profilstränge teilweise umgreifen. Die Führungsprofile können dabei federnd abgestützt sein, um die Haltefunktion der zylindrischen Körper durch die Profilstränge zu unterstützen oder um geometrische Abweichungen der Anlagenelemente auszugleichen. Zusätzliche Vorteile werden durch die Anordnung von Abstützrollen in den Führungsprofilen erwirkt, wenn die Profilstränge an der vom Zwischenraum abgewendeten Seite an diesen Abstützrollen anliegen. Diese Anordnung ermöglicht eine Reduktion der notwendigen Antriebskräfte für die Profilstränge und auch des Verschleisses der Profilstränge.

Die Anordnung einer Verstelleinrichtung für die Führungselemente der Profilstränge um die Profilstränge herum ermöglicht die Anpassung des Fördermittels an unterschiedliche Durchmesser und Formen der zylindrischen Körper. Die Verstelleinrichtung ist so ausgebildet, dass die Führungselemente und damit die Profilstränge quer zur Achsrichtung der Vorformlinge verschiebbar sind. Die Führungselemente umfassen dabei Führungs- und Umlenkrollen sowie die Führungsprofile und allfällige weitere gleichwirkende Elemente. Eine weitere zweckmässige Ausgestaltung der Erfindung sieht vor, in einem Teilbereich des Fördermittels den Zwischenraum zwischen den Profilsträngen zu vergrössern. Dies geschieht durch eine veränderte Anordnung der Führungselemente oder mit Hilfe von Teilen der Verstelleinrichtung. Dabei wird der Zwischenraum soweit erweitert, dass fehlerhafte zylindrische Körper aus dem Fördermittel ausgestossen, bzw. entfernt werden können.

Die erfindungsgemässe Ausgestaltung einer automatischen Transportstrecke zum Fördern von zylindrischen Körpern wie rohrförmige Vorformlinge mit einem kontinuierlich angetriebenen, durchlaufenden Fördermittel, welches mindestens zwei umlaufende, flexible Profilstränge aufweist, wobei dieses Fördermittel im Bereiche einer oder mehrerer Zusatzeinrichtungen nicht unterbrochen ist, führt zu einer wesentlichen Vereinfachung der Transportstrecke und zu erheblichen Einsparungen bei Zusatzgeräten. Dazu trägt wesentlich der Umstand bei, dass das Fördermittel gleichzeitig die Positioniereinrichtung für die zylindrischen Körper in mindestens einer der Zusatzeinrichtungen bildet. In den Zusatzeinrichtungen, beispielsweise Kontrolleinrichtungen, Reinigungseinrichtungen und/oder UV-Bestrahlungsvorrichtungen, welche sehr häufig zwischen der Beschickungseinrichtung und der Übernahmeeinrichtung angeordnet sein müssen, sind keine zusätzlichen Geräte, bzw. Einrichtungen für die Vereinzelung, das Positionieren und das Festhalten der zylindrischen Körper, z.B. Vorformlinge mehr notwendig. Diese Funktionen werden alle vom durchlaufenden und über die ganze Förderstrecke nicht unterbrochenen Fördermittel übernommen.

Erfindungsgemäss wird vorgeschlagen, die Zusatzeinrichtung, bzw. die Zusatzeinrichtungen als Anbaueinrichtungen zum Fördermittel anzuordnen. Dies führt zu einem einfacheren Aufbau der Transportstrecke und damit einer Produktionsstrasse, da die Zusatzgeräte den Verlauf der Transportstrecke und damit den Produktionsfluss nicht unterbrechen, sondern als Anbaueinrichtungen zum Fördermittel hinzugefügt werden. Dies erlaubt im Weiteren das einfache Hinzufügen von Zusatzeinrichtungen zu einer Förderstrecke, bzw. Produktionsstrasse oder das Entfernen von Zusatzeinrichtungen, da die Förderung und Positionierung der zylindrischen Körper mittels der Profilstränge des Fördermittels erfolgt. In weiterer Ausgestaltung weisen die Zusatzeinrichtungen keine zusätzlichen Positioniereinrichtungen für die zylindrischen Körper auf. Dies hat den Vorteil, dass zusätzliche mechanische Einrichtungen eingespart werden können.

Es ist auch vorteilhaft, dass das Fördermittel zwischen der Beschickungseinrichtung unter der Übernahmeeinrichtung eine ununterbrochene durchlaufende Förderstrecke bildet und diese Förderstrecke keine Stauräume für die zylindrischen Körper aufweist. Dies bringt den Vorteil, dass entlang des Fördermittels, bzw. der Förderstrecke weniger Platz benötigt wird und dadurch die Förderstrecke, bzw. Produktionsstrasse kompakter und einfacher gestaltet werden kann. Durch den Wegfall der Stauräume entfallen auch störungsanfällige Übergangsbereiche, in welchen die zylindrischen Körper wieder vom Fördermittel übernommen und neu positioniert werden müssten.

Eine vorteilhafte Ausbildung des Erfindungsgegenstandes sieht vor, dass die zylindrischen Körper im Fördermittel in der richtigen Lage und mit einem vorgegebenen Abstand zueinander festgelegt sind. Zudem soll das Fördermittel horizontal, vertikal und/oder schräg verlaufen können, wobei die zylindrischen Körper relativ zum Fördermittel immer in der gleichen Position und Lage eingespannt sind. Damit ist es möglich, die zylindrischen Körper in der gewünschten Transport- und Bearbeitungsposition zu halten und sie mittels des Fördermittels so auszurichten, dass sie in den Zusatzeinrichtungen sowie an der Übergabestelle zur Übernahmeeinrichtung immer die richtige Position und Lage aufweisen. Dies ermöglicht einen kontinuierlichen Bearbeitungs- und Handhabungsablauf für die zylindrischen Körper in der Transportstrecke sowie eine Verbesserung des Produktionsprozesses.

Erfindungsgemäss wird weiter vorgeschlagen, dass die beiden flexiblen Profilstränge des Fördermittels je als endloser, umlaufender Strang ausgebildet sind und die Stränge im Bereiche der durch das Fördermittel gebildeten Förderstrecke für die zylindrischen Körper etwa parallel und mit einem Zwischenraum zueinander angeordnet sind, wobei die zylindrischen Körper in diesem Zwischenraum positioniert und gehalten sind. Die Anwendung der endlosen, umlaufenden Stränge gewährleistet eine gleichbleibende Transportgeschwindigkeit für alle zylindrischen Körper, welche sich in der Transportstrecke zwischen der Beschickungseinrichtung und der Übernahmeeinrichtung befinden. Als vorteilhaft erweist es sich, wenn das Fördermittel in einer Verstelleinrichtung angeordnet ist und diese Verstelleinrichtung Mittel zum Verschieben der beiden umlaufenden Stränge quer zur Achsrichtung der zylindrischen Körpern aufweist. Mittels dieser Verstelleinrichtung kann der Zwischenraum zwischen den beiden Strängen des Fördermittels verändert werden. Dies ermöglicht in einfacher Weise die Anpassung des Fördermittels und damit der Förderstrecke, bzw. Produktionsstrasse an zylindrische Körper mit unterschiedlichen Durchmessern und Formen. Die entsprechenden Anpassungen, bzw. Verschiebungen müssen nur an dem einzigen Fördermittel zwischen der Beschickungseinrichtung und der Übernahmeeinrichtung vorgenommen werden. Die Anpassung von Fördermitteln, Spannmittel oder positionierten Elementen in den Zusatzeinrichtungen entfällt, wodurch Anpassungen der Transportstrecke an unterschiedliche Typen von zylindrischen Körpern, wie Vorformlinge schneller und einfacher durchgeführt werden können.

Bei zylindrischen Körpern mit einem Hohlraum kann es wünschbar sein, die Hohlkörper in einer Vertikalebene um 180° zu wenden, um Fremdpartikel aus dem Hohlraum auszuleeren, bzw. heraus fallen zu lassen. Nach einer weiteren Wendung um 180° befinden sich die Hohlkörper wieder in Normalposition. Diese Wendungen können erreicht werden, indem die beiden Profilstränge um vertikale Rollen umgelenkt werden. Dies ist in einfacher Weise möglich und es ist nur wenig Platz notwendig.

Im Folgenden wird die Erfindung anhand von Ausführungsbeispielen unter Bezugnahme auf die beiliegenden Zeichnungen näher erläutert. Es zeigen:
- Fig. 1: eine Teilaufsicht auf den Anfangsbereich eines erfindungsgemässen Fördermittels von oben,
- Fig. 2: einen Querschnitt durch das Fördermittel entlang der Linie A-A in Fig. 1,
- Fig.3: einen vergrösserten Querschnitt durch den zentralen Bereich des Fördermittels gemäss Fig. 2, und
- Fig. 4: eine schematische Darstellung einer Produktionsstrasse mit einer durchlaufenden Transportstrecke.

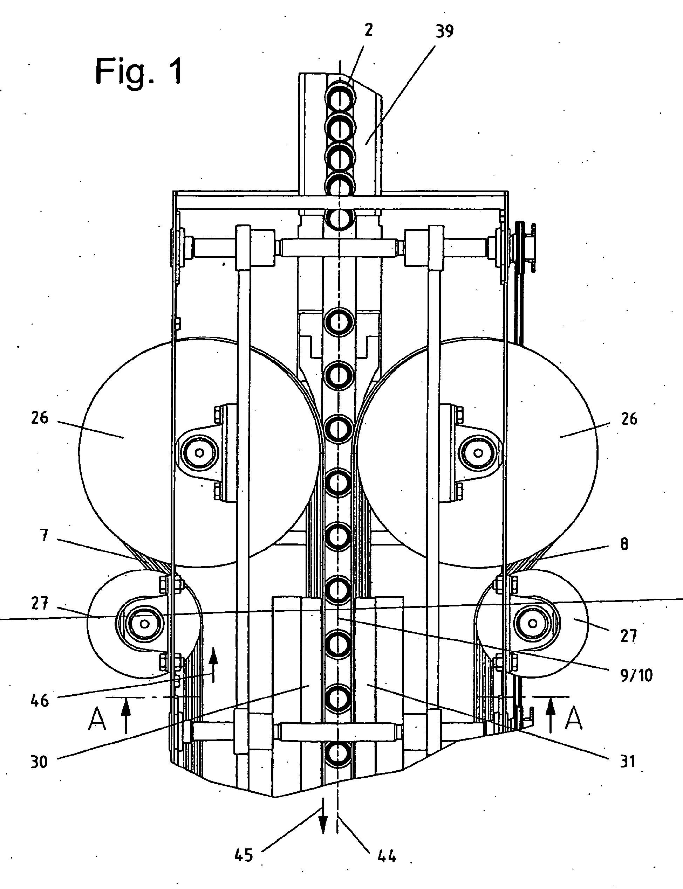

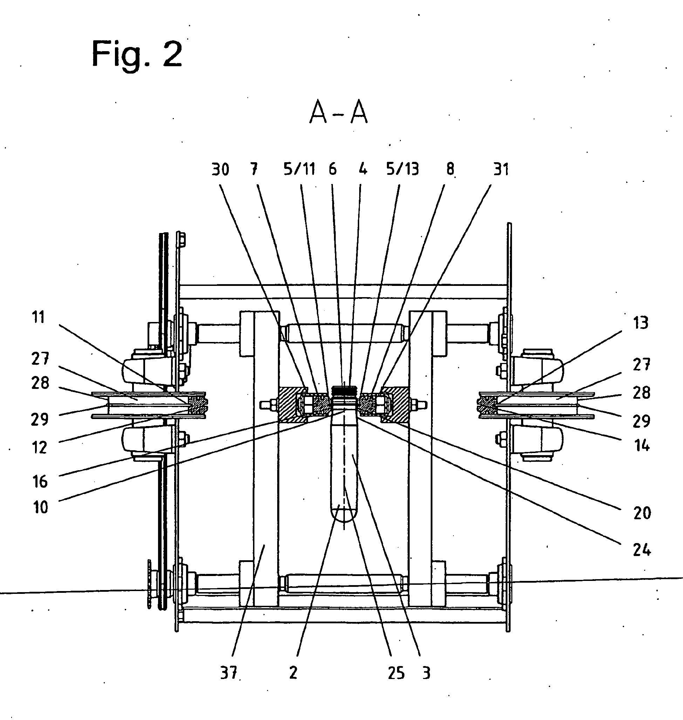

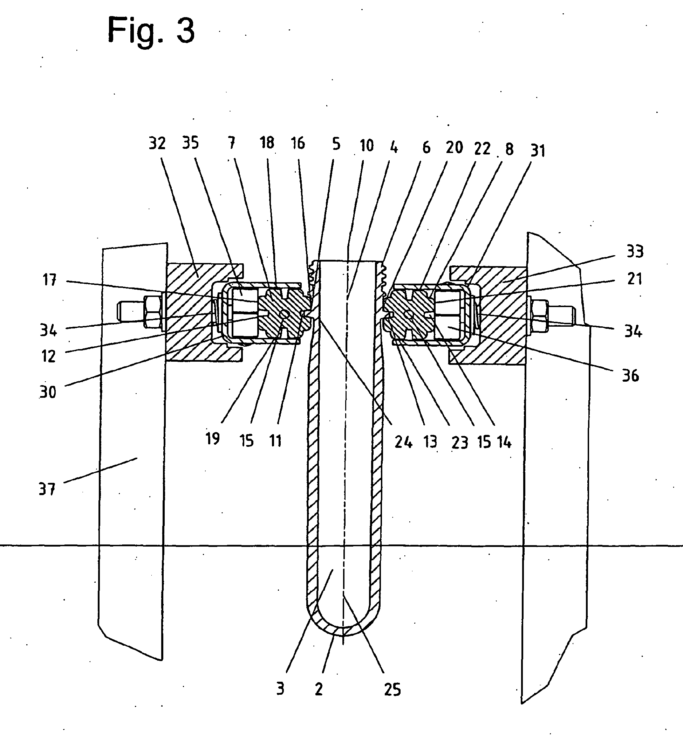

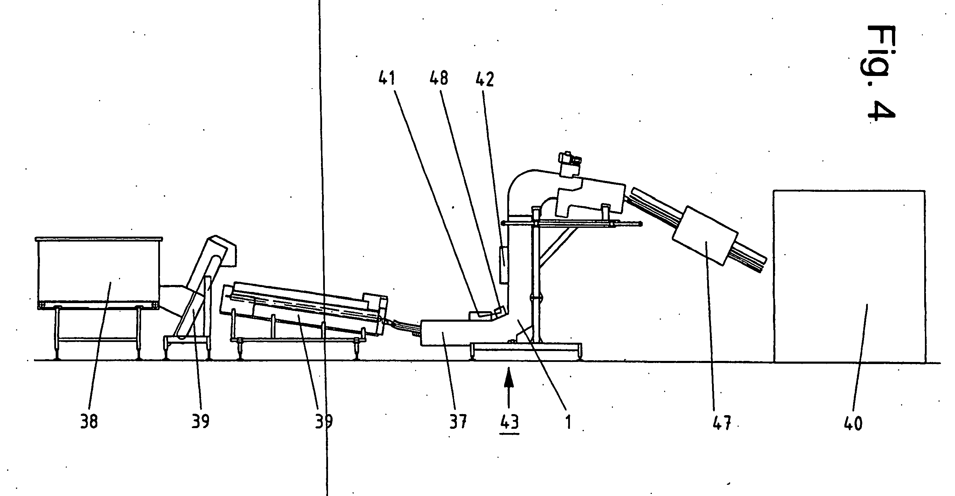

In Fig. 1 ist in schematischer Weise eine Teilaufsicht auf einen Anfangsbereich eines erfindungsgemässen Fördermittels 1 von oben dargestellt. Wie aus Fig. 4 ersichtlich ist, ist das Fördermittel 1 zwischen einer Beschickungseinrichtung 38 und einer Übernahmeeinrichtung 47 für zylindrische Körper 2, im dargestellten Beispiel für rohrförmige Vorformlinge aus Kunststoff, angeordnet. Aus den Vorformlingen 2 werden in einer Formgebungseinrichtung 40, z.B. einer an sich bekannten Streckblaseinrichtung, welche an die Übernahmeeinrichtung 47 anschliesst, Hohlkörper, z.B. Flaschen hergestellt. Der in Fig. 1 dargestellte Anfangsbereich des Fördermittels 1 schliesst an eine an sich bekannte Vereinzelungseinrichtung 39 der Beschickungseinrichtung 38 an. Das Fördermittel 1 umfasst dabei zwei Profilstränge 7, 8, welche je als Endlosstrang ausgebildet sind und um Führungs- und Umlenkrollen 26, 27 umlaufen. Die beiden Profilstränge 7, 8 werden im Führungsbereich 9 für die Vorformlinge 2 zusammengeführt und parallel nebeneinander geführt. Der Führungsbereich 9 erstreckt sich entlang der Förderachse 44 für die Vorformlinge 2, welche mittels der Fördereinrichtung 1 in Richtung des Pfeiles 45 gefördert werden. Die Profilstränge 7, 8 sind flexibel und mindestens im Bereiche ihres Aussenmantels elastisch und werden beispielsweise aus einem Kunststoffmaterial der Gruppe der Polyurethane gefertigt. Im Führungsbereich 9 sind die Profilstränge 7, 8 mit Abstand zueinander angeordnet und bilden einen Zwischenraum 10. Dieser Zwischenraum 10 ist so bemessen, dass die Vorformlinge 2 kraft-/formschlüssig gehalten und festgestellt werden. Die Vorformlinge 2 werden durch das Fördermittel 1 von der Vereinzelungseinrichtungen 39 in einem vorbestimmten Abstand übernommen. Dieser vorbestimmte Abstand der Vorformlinge 2 in Richtung der Förderachse 44 wird durch die ganze Fördereinrichtung 1, bzw. Transportstrecke 43 beibehalten. Die Längsachse 25 der Vorformlinge 2 ist dabei etwa rechtwinklig zur Förderachse 44 ausgerichtet (siehe Fig. 2) und deren Ausrichtung wird in Bezug auf die Förderachse 44 und damit auf die Längsachse der beiden Profilstränge 7, 8 ebenfalls fest beibehalten. Die Profilstränge 7, 8 laufen ohne Unterbruch entlang der Förderachse 44 in Richtung des Pfeiles 45 bis zum Endbereich des Fördermittels 1 an der Übernahmeeinrichtung 47. Dort sind ebenfalls Führungs- und Umlenkrollen 26, 27 angeordnet, welche in etwa der Anordnung gemäss Fig. 1 entsprechen. Mit Hilfe dieser Führungs-und Umlenkrollen 26, 27 werden die Profilstränge 7, 8 umgelenkt und laufen parallel zur Förderachse 44 in Richtung der Pfeile 46 zurück zum Anfangsbereich des Fördermittels 1. In Teilbereichen der Förderstrecke 43 sind die Profilstränge 7, 8 in Führungsprofilen 30, 31 geführt. Deren Anordnung ist in Fig. 3 dargestellt und in der entsprechenden Figurenbeschreibung näher erläutert.

In Fig. 2 sind aus dem Querschnitt entlang der Linie A-A gemäss Fig. 1 weitere Details der erfindungsgemässen Anordnung ersichtlich. Bei der hier dargestellten Ausführungsform der Erfindung weisen die Profilstränge 7, 8 einen etwa quadratischen Querschnitt auf und an jeder der vier, in Fig. 3 gezeichneten Seitenflächen 16-19, bzw. 20-23 der beiden Profilstränge 7, 8 sind Nuten angeordnet. Der hier im Längsschnitt dargestellte Vorformling 2 besteht aus einem Zylinderteil 3 mit einem geschlossenen Ende und mit einem offenen Endbereich 4, welcher an der Aussenseite mindestens einen Kragen 5 und einen daran anschliessenden Gewindestutzen 6 aufweist. Es können auch noch weitere Kragen oder Auflageflächen vorhanden sein. An der gegen den Zwischenraum 10 gerichteten Seitenfläche 16 des Profilstranges 7 ist die Führungsnute 11 angeordnet und an der ebenfalls gegen den Zwischenraum 10 gerichteten Seitenfläche 20 des Profilstranges 8 die Führungsnute 13. Beide Führungsnuten 11, 13 verlaufen parallel zur Längsachse der beiden Profilstränge 7, 8. In diese beiden Führungsnuten 11, 13 greifen Teilbereiche der Kragen 5 der Vorformlinge 2 ein und werden darin gehalten. Dadurch erfolgt eine eindeutige Ausrichtung der Längsachse 25 der Vorformlinge 2 im Verhältnis zu den beiden Profilsträngen 7, 8. Zusätzlich werden Teilbereiche 24 der Vorformlinge 2, welche an den Kragen 5 angrenzen, zwischen den beiden Seitenflächen 16, 20 der beiden Profilstränge 7, 8 elastisch eingespannt und gehalten. Dadurch ergibt sich eine zuverlässige Positionierung und Halterung der Vorformlinge 2 im Zwischenraum 10 zwischen den beiden Profilsträngen 7, 8. Die Führung der beiden Profilstränge 7, 8 erfolgt dabei über die Führungs- und Umlenkrollen 26, 27. Diese Führungs- und Umlenkrollen 26, 27 weisen an ihrem Zylindermantel 28 einen radialen Kragen 29 auf, welcher mit den an den Aussenflächen 17, 21 der beiden Profilstränge 7, 8 angeordneten Nuten 12, 14, bzw. den an den Innenflächen 16, 20 angeordneten Nuten 11, 13 zusammenwirken und in diese eingreifen. Mit Hilfe dieser Anordnung werden die Profilstränge 7, 8 in der Transportebene der Transportstrecke 43 genau positioniert und geführt. Mindestens eine der Führungs- und Umlenkrollen 26, 27 für jeden Strang 7, 8 ist als Antriebsrolle ausgebildet und mit entsprechenden nicht dargestellten Antriebsmitteln verbunden. Mindestens ein Teil der Führungs- und Umlenkrollen 26, 27 ist an einer Verstelleinrichtung 37 abgestützt, mit welcher der Zwischenraum 10 zwischen den beiden Profilsträngen 7, 8 im Führungsbereich 9 verändert werden kann. Diese Verstelleinrichtung 37 ist um die Profilstränge 7, 8 herum angeordnet und sie dient dazu, alle Führungselemente für die Profilstränge 7, 8 auf die richtige Position einzustellen. Führungselemente bilden dabei die Führungs- und Umlenkrollen 26, 27 sowie die Führungsprofile 30, 31. Auch für diese Verstelleinrichtung 37 sind entsprechende, an sich bekannte Antriebseinheiten vorhanden, welche nicht dargestellt sind.

Aus Fig. 3 ist die Ausgestaltung des erfindungsgemässen Fördermittels 1 im zentralen Bereich der Darstellung gemäss Fig. 2 in vergrösserter und schematischer Darstellung ersichtlich. In diesem Teilbereich der Transportstrecke 43 sind die beiden Profilstränge 7, 8 in je einem Führungsprofil 30, 31 geführt. Diese Führungsprofile 30, 31 weisen einen C-förmigen Querschnitt auf und sind an Halterungen 32, 33 befestigt, welche mit der Verstelleinrichtung 37 verbunden sind. Die jeweiligen oberen und unteren Seitenflächen 18, 19, bzw. 22, 23 der beiden Profilstränge 7, 8 werden an den beiden Schenkeln der C-förmigen Führungsprofile 30, 31 geführt und gleiten entlang deren Seitenflächen. Die vom Zwischenraum 10 weggerichteten Seitenflächen 17, 21 der beiden Profilstränge 7, 8 liegen an Abstützrollen 35, 36 an, welche am Bodenbereich der Führungsprofile 30, 31 drehbar gelagert sind. An den Führungsprofilen 30, 31 sind eine Vielzahl derartiger Abstützrollen 35, 36 in kurzen Abständen zueinander angeordnet, so dass eine optimale Abstützung und Führung der beiden Profilstränge 7, 8 gewährleistet ist. Die beiden Führungsprofile 30, 31 sind über Federn 34 an den Halterungen 32, 33 abgestützt. Im dargestellten Beispiel handelt es sich um Druckfedern, welche dafür sorgen, dass die Profilstränge 7, 8 immer mit genügender Anpresskraft gegen die Seitenbereiche der Vorformlinge 2 im Zwischenraum 10 gepresst werden. Wie bereits zu Fig. 2 beschrieben wurde, greifen Teilbereiche des Kragens 5 an jedem Vorformling 2 in die beiden Führungsnuten 11, 13 an den Innenflächen 16, 20 der beiden Profilstränge 7, 8 ein. Im Zentrum der beiden Profilstränge 7, 8 sind im dargestellten Beispiel längsgerichtete Kerne 15 angeordnet. Diese Kerne 15 sind aus Polyesterfasern gebildet und dienen der Zugentlastung und bewirken die notwendige Festigkeit in Längsrichtung.

Fig. 4 zeigt eine erfindungsgemässe Transportstrecke 43, welche in eine automatische Produktionsstrasse zum Herstellen von Hohlkörpern aus rohrförmigen Vorformlingen 2 eingebaut ist, in schematischer Darstellung. An einer Beschickungseinrichtung 38 werden die Vorformlinge 2 in bekannter Weise ungeordnet eingegeben. Die Beschickungseinrichtung 38 ist mit einer an sich bekannten Vereinzelungseinrichtung 39 ausgestattet, welche dazu dient, die Vorformlinge 2 zu vereinzeln und in eine gewünschte Position mit entsprechender Ausrichtung der Achse 25 zu bringen. Mittels dieser Vereinzelungseinrichtung 39 werden die geordneten Vorformlinge 2 mit den gewünschten Abständen zueinander an das Fördermittel 1 der Transportstrecke 43 übergeben. Die Förderstrecke 43 und damit das Fördermittel 1, weiches mindestens zwei umlaufende, flexible Profilstränge 7, 8 aufweist, erstreckt sich dabei ohne Unterbrechung bis zu einer Übernahmeeinrichtung 47. Diese Übernahmeeinrichtung 47 dient im dargestellten Beispiel als Hilfseinrichtung für die Beschickung einer Formgebungseinrichtung 40. Die Übernahmeeinrichtung 47 könnte aber auch einen Puffer, eine Entnahmestation oder dergleichen bilden. Bei der Formgebungseinrichtung 40 handelt es sich im dargestellten Beispiel um eine Streckblaseinrichtung zur Herstellung von Kunststofflaschen aus dem Material PET. Das Fördermittel 1 ist entlang der Förderstrecke 43 mit der bereits beschriebenen Verstelleinrichtung 37 verbunden, welche dazu dienen, das Fördermittel 1 und damit die Förderstrecke 43 an Vorformlinge 2 mit unterschiedlichen Durchmessern und Formen anzupassen. Entlang des Fördermittels 1 sind Zusatzeinrichtungen angeordnet, im dargestellten Beispiel eine Messeinrichtung 41 zur Kontrolle der korrekten Abmessungen der Vorformlinge 2 und eine Reinigungseinrichtung 42 zum Reinigen des Hohlraumes der Vorformlinge 2. Nach der Messeinrichtung 41 ist eine Auswurfeinrichtung 48 angeordnet. Diese dient dem Entfernen von fehlerhaften Vorformlingen 2 aus der Transportstrecke 43 und wirkt mit einem entsprechend ausgebildeten Teilbereich des Fördermittels 1 zusammen. Bei Bedarf können auch noch weitere derartige Zusatzeinrichtungen in die Produktionsstrasse eingefügt werden. Das Fördermittel 1 und damit die beiden Profilstränge 7, 8 sind im Bereiche der Zusatzeinrichtungen 41, 42 nicht unterbrochen, sondern laufen durch diese hindurch. Es sind deshalb keine zusätzlichen Übernahme- und Übergabeeinrichtungen sowie Förder- und Positioniereinrichtungen im Bereiche dieser Zusatzeinrichtungen 41, 42 vorhanden und notwendig. Die Zusatzeinrichtungen 41, 42 sind als Anbaueinrichtungen zum Fördermittel 1 ausgebildet und entsprechend angeordnet. Sie können deshalb ohne Schwierigkeiten und ohne wesentlichen Aufwand aus der Förderstrecke, bzw. der Produktionsstrasse entfernt oder bei Bedarf eingefügt werden. Dies erleichtert Veränderungen des Produktionsvorganges aber auch Reparaturen bei Defekten an den Zusatzeinrichtungen. Im dargestellten Beispiel erstreckt sich das Fördermittel 1 mit den beiden Profilsträngen 7, 8 teilweise horizontal und teilweise schräg und vertikal, wobei die Vorformlinge 2 im Verhältnis zum Fördermittel 1 immer in der gleichen Position und Lage zwischen den beiden Profilsträngen 7, 8 eingespannt und positioniert sind. Dies ist insbesondere mit dem vorstehend beschriebenen und erläuterten erfindungsgemässen Fördermittel 1 für Vorformlinge 2 möglich, bei welchem die beiden flexiblen Profilstränge 7, 8 je als endloser umlaufender Strang ausgebildet sind. Dabei sind die beiden flexiblen Profilstränge 7, 8 im Bereiche der durch das Fördermittel 1 gebildeten Förderstrecke 43 für die Vorformlinge 2 etwa parallel und mit einem Zwischenraum 10 zueinander angeordnet und die Vorformlinge 2 sind in diesem Zwischenraum positioniert und gehalten.

Das erfindungsgemässe Fördermittel 1 ermöglicht die Gestaltung einer sehr kompakten und betriebssicheren Förderstrecke 43. wegen der reduzierten Verschmutzungsgefahr ist auch der Wartungsaufwand gering. Zusatzeinrichtungen, wie beispielsweise die Reinigungseinrichtung 42 können auch im vertikalen oder schrägen Bereich der Förderstrecke 43 angeordnet werden. Dies ist bei den bekannten Fördermitteln nicht oder nur mit erheblichem Zusatzaufwand möglich. Bei der erfindungsgemässen Einrichtung sind die Vorformlinge, bzw. die zylindrischen Körper 2 positionsgenau und fest zwischen den Profilsträngen 7, 8 gehalten. Dies ermöglicht die Ausführung von Arbeitsvorgängen mit den Vorformlingen 2 im horizontalen, schrägen wie auch im vertikalen Bereich der Transportstrecke 43.

## Patentansprüche

1. Fördermittel für zylindrische Körper (2), wie Vorformlinge für Hohlkörper, welche mindestens einen Kragen (5) aufweisen, in einer Transportstrecke, wobei das Fördermittel (1) eine umlaufendes Förderelement umfasst und die zylindrischen Körper (2) durch das Förderelement an zwei gegenüberliegenden Seiten geführt werden, wobei das Förderelement ein Riemenförderer ist, welcher zwei flexible Profilstränge (7, 8) mit mindestens einem elastischen Aussenmantel aufweist, jeder der Profilstränge (7, 8) als Endlosstrang ausgebildet ist, die beiden Profilstränge (7, 8) im Führungsbereich (9) für die zylindrischen Körper (2) parallel zueinander verlaufen und mit einem Zwischenraum (10) zueinander angeordnet sind, an den beiden Profilsträngen (7, 8) an der gegen den Zwischenraum (10) gerichteten Seite (16, 20) des Mantels je eine Führungsnute (11, 13) ausgebildet ist, welche parallel zur Längsachse des Profilstranges (7, 8) verläuft und Teilbereiche der Kragen (5) der zylindrischen Körper (2) in diesen beiden Nuten (11, 13) festlegbar sind, **dadurch gekennzeichnet, dass** der Querschnitt der Profilstränge (7, 8) symmetrisch ausgebildet ist, an mindestens zwei sich gegenüberliegende Seiten je eine Nute (11, 12; 13, 14) angeordnet ist, die vom Zwischenraum, (10) weg nach Aussen gerichteten Nuten (12, 14) mit Umlenkrollen (26) zusammenwirken, diese Umlenkrollen (26) am Mantel einen radialen Kragen (29) aufweisen und dieser Kragen (29) teilweise in diese Nuten (12, 14) eingreift.

2. Fördermittel für zylindrische Körper (2) nach Patentanspruch 1, **dadurch gekennzeichnet, dass** die Profilstränge (7, 8) einen etwa quadratischen Querschnitt aufweisen und an jeder der vier Seitenflächen (16-19; 20-23) eine Nute ausgebildet ist.

3. Fördermittel für zylindrische Körper (2) nach einem der Patentansprüche 1 bis 2, **dadurch gekennzeichnet, dass** die Profilstränge (7, 8) aus einem elastischen Material geformt sind.

4. Fördermittel für zylindrische Körper (2) nach einem der Patentansprüche 1 bis 3, **dadurch gekennzeichnet, dass** die Profilstränge (7, 8) einen längsgerichteten Kern (15) zur Zugentlastung aufweisen.

5. Fördermittel für zylindrische Körper (2) nach einem der Patentansprüche 1 bis 4, **dadurch gekennzeichnet, dass** die zylindrischen Körper (2) im Zwischenraum (10) zwischen den beiden Profilsträngen (7, 8) gehalten sind und ein Teilbereich des Kragens (5) der zylindrischen Körper (2) in die Nuten (11, 13) an den Profilsträngen (7, 8) eingreift sowie ein an den Kragen (5) angrenzender Teilbereich (24) der zylindrischen Körper (2) zwischen den gegenüberliegenden Seitenflächen (16, 20) der Profilstränge (7, 8) gehalten ist.

6. Fördermittel für zylindrische Körper (2) nach einem der Patentansprüche 1 bis 5 **dadurch gekennzeichnet, dass** die Profilstränge (7, 8) in Teilbereichen des Fördermittels (1) in Führungsprofilen (30, 31) geführt sind, welche weitere Führungselemente bilden.

7. Fördermittel für zylindrische Körper (2) nach einem der Patentansprüche 1 bis 6, **dadurch gekennzeichnet, dass** um die Profilstränge (7, 8) eine Verstelleinrichtung (37) für die Führungselemente (26, 27, 30, 31) der Profilstränge (7, 8) angeordnet ist und mittels dieser Einrichtung (37) die Führungselemente (26, 27, 30, 31) und damit die Profilstränge (7, 8) quer zur Achsrichtung (25) der Vorformlinge (2) verschiebbar sind.

8. Fördermittel für zylindrische Körper (2) nach einem der Patentansprüche 1 bis 7, **dadurch gekennzeichnet, dass** in einem Teilbereich des Fördermittels (1) der Zwischenraum (10) zwischen den Profilsträngen (7, 8) vergrössert ist, um fehlerhafte zylindrische Körper (2) aus dem Fördermittel (1) auszustossen.

9. Fördermittel für zylindrische Körper (2) nach Patentanspruch 6, **dadurch gekennzeichnet, dass** die Führungsprofile (30, 31) federnd abgestützt sind.

10. Fördermittel für zylindrische Körper (2) nach Patentanspruch 6, **dadurch gekennzeichnet, dass** in den Führungsprofilen (30, 31) drehbare Abstützrollen (35, 36) angeordnet sind und die Profilstränge (7, 8) an der vom Zwischenraum (10) abgewendeten Seite (17, 21) an diesen Abstützrollen (35, 36) anliegen.

11. Fördermittel für zylindrische Körper (2) nach Patentanspruch 3, **dadurch gekennzeichnet, dass** das elastische Material ein Kunststoff aus der Gruppe der Polyurethane ist.

12. Automatische Transportstrecke (43) zum Fördern von zylindrischen Körpern (2) wie Vorformlinge, welche mindestens einen Kragen (5) aufweisen, zwischen einer Beschickungseinrichtung (38, 39) für ungeordnete zylindrische Körper (2), und einer Übernahmeeinrichtung (47) für die zylindrischen Körper (2), mit mindestens einer zusätzlichen Einrichtung (41, 42) zur Kontrolle oder für andere Behandlungsmassnahmen an den zylindrischen Körpern (2), wobei diese Einrichtung (41, 42) zwischen der Beschickungseinrichtung (38, 39) und der Übernahmeeinrichtung (47) angeordnet ist, mit einem durchlaufenden Fördermittel (1) für die Vorformlinge (2), welches zwei umlaufende, flexible Profilstränge (7, 8) aufweist, **dadurch gekennzeichnet, dass** die Profilstränge (7, 8) des Fördermittels (1) an mindestens zwei sich gegenüberliegenden Seiten je eine Nute (11, 12; 13, 14) aufweisen und im Bereiche der Zusatzeinrichtung oder der Zusatzeinrichtungen (41, 42) nicht unterbrochen sind, die vom Zwischenraum (10) weg nach aussen gerichteten Nuten (12, 14) mit Umlenkrollen (26) zusammenwirken, diese Umlenkrollen (26) am Mantel einen radialen Kragen (29) aufweisen und dieser Kragen (29) teilweise in diese Nuten (12, 14) eingreift, das Fördermittel (1) horizontal, vertikal und/oder schräg verläuft und dabei die zylindrischen Körper (2) relativ zum Fördermittel (1) immer in der gleichen Position und Lage eingespannt sind und das Fördermittel (1) gleichzeitig die Positioniereinrichtung für die Vorformlinge (2) in mindestens einer Zusatzeinrichtung (41, 42) bildet.

13. Automatische Transportstrecke (43) nach Patentanspruch 12, **dadurch gekennzeichnet, dass** die Zusatzeinrichtung (41, 42) als Anbaueinrichtung zum Fördermittel (1) angeordnet ist.

14. Automatische Transportstrecke (43) nach Patentanspruch 12 oder 13, **dadurch gekennzeichnet, dass** die Zusatzeinrichtung (41, 42) keine zusätzlichen Positioniereinrichtungen für die zylindrische Körper (2) aufweist.

15. Automatische Transportstrecke (43) nach einem der Patentansprüche 12 bis 14, **dadurch gekennzeichnet, dass** das Fördermittel (1) zwischen der Beschickungseinrichtung (38, 39) und der Übernahmeeinrichtung (47) eine ununterbrochene, durchlaufende Förderstrecke bildet und diese Förderstrecke keine Stauräume für zylindrische Körper (2) aufweist.

16. Automatische Transportstrecke (43) nach einem der Patentansprüche 12 bis 15, **dadurch gekennzeichnet, dass** die zylindrischen Körper (2) im Fördermittel (1) in der richtigen Lage und mit einem vorgegebenen Abstand zueinander festgelegt sind.

17. Automatische Transportstrecke (43) nach einem der Patentansprüche 12 bis 16, **dadurch gekennzeichnet, dass** die beiden flexiblen Profilstränge (7, 8) des Fördermittels (1) je als endloser, umlaufender Strang ausgebildet sind und die Stränge (7, 8) im Bereiche der durch das Fördermittel (1) gebildeten Förderstrecke (43) für die zylindrischen Körper (2) etwa parallel und mit einem Zwischenraum (10) zueinander angeordnet sind, wobei die zylindrischen Körper (2) in diesem Zwischenraum (10) positioniert und gehalten sind.

18. Automatische Transportstrecke (43) nach einem der Patentansprüche 12 bis 17, **dadurch gekennzeichnet, dass** das Fördermittel (1) in einer Verstelleinrichtung (37) angeordnet ist und diese Verstelleinrichtung (37) Mittel zum Verschieben der beiden umlaufenden Stränge (7, 8), quer zur Achsrichtung (25) der zylindrischen Körper (2), aufweist.

## Claims

1. Conveying means for cylindrical bodies (2), such as preforms for hollow bodies, which have at least one collar (5), in a conveying section, wherein the conveying means (1) comprises a revolving conveying element and the cylindrical bodies (2) are guided at two opposite sides by means of the conveying element, wherein the conveying element is a belt conveyor comprising two flexible profiled ropes (7, 8) with at least one elastic outer sheath, each of the profiled ropes (7, 8) takes the form of a continuous rope, the two profiles ropes (7, 8) in the guide region (9) for the cylindrical bodies (2) run parallel to one another and are disposed with a clearance (10) relative to one another, on each of the two profiled ropes (7, 8) at the side (16, 20) of the sheath facing the clearance (10) a guide groove (11, 13) is formed, which runs parallel to the longitudinal axis of the profiled rope (7, 8), and sub-regions of the collars (5) of the cylindrical bodies (2) are fixable in said two grooves (11, 13), **characterized in that** the cross section of the profiled ropes (7, 8) is of a symmetrical design, at each of at least two mutually opposite sides a groove (11, 12; 13, 14) is disposed, the grooves (12, 14) directed outwards away from the clearance (10) interact with guide rollers (26), said guide rollers (26) have on the lateral surface a radial collar (29) and said collar (29) engages partially into said grooves (12, 14).

2. Conveying means for cylindrical bodies (2) according to claim 1, **characterized in that** the profiled ropes (7, 8) have an approximately square cross section and at each of the four side faces (16-19; 20-23) a groove is formed.

3. Conveying means for cylindrical bodies (2) according to one of claims 1 to 2, **characterized in that** the profiled ropes (7, 8) are formed from an elastic material.

4. Conveying means for cylindrical bodies (2) according to one of claims 1 to 3, **characterized in that** the profiled ropes (7, 8) have a longitudinally oriented core (15) for strain relief.

5. Conveying means for cylindrical bodies (2) according to one of claims 1 to 5, **characterized in that** the cylindrical bodies (2) are held in the clearance (10) between the two profiled ropes (7, 8) and a sub-region of the collar (5) of the cylindrical bodies (2) engages into the grooves (11, 13) on the profiled ropes (7, 8) and a sub-region of the cylindrical bodies (2) that adjoins the collar (5) is held between the opposing side faces (16, 20) of the profiled ropes (7, 8).

6. Conveying means for cylindrical bodies (2) according to one of claims 1 to 5, **characterized in that** the profiled ropes (7, 8) in sub-regions of the conveying means (1) are guided in guide profiles (30, 31), which form further guide elements.

7. Conveying means for cylindrical bodies (2) according to one of claims 1 to 6, **characterized in that** around the profiled ropes (7, 8) an adjusting device (37) for the guide elements (26, 27, 30, 31) of the profiled ropes (7, 8) is disposed and by means of said device (37) the guide elements (26, 27, 30, 31) and hence the profiled ropes (7, 8) are displaceable transversely of the axial direction (25) of the preforms (2).

8. Conveying means for cylindrical bodies (2) according to one of claims 1 to 7, **characterized in that** in a sub-region of the conveying means (1) the clearance (10) between the profiled ropes (7, 8) is enlarged in order to eject defective cylindrical bodies (2) from the conveying means (1).

9. Conveying means for cylindrical bodies (2) according to claim 6, **characterized in that** the guide profiles (30, 31) are resiliently supported.

10. Conveying means for cylindrical bodies (2) according to claim 6, **characterized in that** in the guide profiles (30, 31) rotatable support rollers (35, 36) are disposed and the profiled ropes (7, 8) at the side (17, 21) remote from the clearance (10) rest against said support rollers (35, 36).

11. Conveying means for cylindrical bodies (2) according to claim 3, **characterized in that** the elastic material is a plastics material from the group of polyurethanes.

12. Automatic conveying section (43) for conveying cylindrical bodies (2) such as preforms, which have at least one collar (5), between a feed device (38, 39) for disordered cylindrical bodies (2) and a take-over device (47) for the cylindrical bodies (2), having at least one additional device (41, 42) for inspection or other handling measures of the cylindrical bodies (2), wherein said device (41, 42) is disposed between the feed device (38, 39) and the take-over device (47), having a continuous conveying means (1) for the preforms (2), which comprises two revolving, flexible profiled ropes (7, 8), **characterized in that** the profiled ropes (7, 8) of the conveying means (1) at each of at least two mutually opposite sides have a groove (11, 12; 13, 14) and in the region of the additional device or the additional devices (41, 42) are not interrupted, the grooves (12, 14) oriented outwards away from the clearance (10) interact with guide rollers (26), said guide rollers (26) have on the lateral surface a radial collar (29) and said collar (29) engages partially into said grooves (12, 14), the conveying means (1) runs horizontally, vertically and/or obliquely and in so doing the cylindrical bodies are clamped always in the same position and location relative to the conveying means (1) and the conveying means (1) simultaneously forms the positioning device for the preforms (2) in at least one additional device (41, 42).

13. Automatic conveying section (43) according to claim 12, **characterized in that** the additional device (41, 42) is arranged as an add-on device relative to the conveying means (1).

14. Automatic conveying section (43) according to claim 12 or 13, **characterized in that** the additional device (41, 42) has no additional positioning devices for the cylindrical bodies (2).

15. Automatic conveying section (43) according to one of claims 12 to 14, **characterized in that** the conveying means (1) forms an uninterrupted, continuous conveying section between the feed device (38, 39) and the take-over device (47) and said conveying section has no retaining spaces for cylindrical bodies (2).

16. Automatic conveying section (43) according to one of claims 12 to 15, **characterized in that** the cylindrical bodies (2) are fixed in the correct position and with a defined mutual spacing in the conveying means (1).

17. Automatic conveying section (43) according to one of claims 12 to 16, **characterized in that** the two flexible profiled ropes (7, 8) of the conveying means (1) each take the form of a continuous, revolving rope, and the ropes (7, 8) in the region of the conveying section (43) for the cylindrical bodies (2) that is formed by the conveying means (1) are disposed approximately parallel and with a clearance (10) relative to one another, wherein the cylindrical bodies (2) are positioned and held in said clearance (10).

18. Automatic conveying section (43) according to one of claims 12 to 17, **characterized in that** the conveying means (1) is disposed in an adjusting device (37) and said adjusting device (37) comprises means of displacing the two revolving ropes (7, 8) transversely of the axial direction (25) of the cylindrical bodies (2).

## Revendications

1. Organe convoyeur pour corps cylindriques (2), tels que des ébauches ou préformes pour corps creux, qui présentent au moins une collerette (5), dans un parcours de transport, l'organe convoyeur (1) comprenant un élément de convoyeur en révolution et les corps cylindriques (2) étant guidés par l'élément de convoyeur sur deux côtés opposés, l'élément de convoyeur étant un convoyeur à courroie, qui comprend deux brins profilés (7, 8), flexibles, avec au moins une enveloppe extérieure élastique, chacun des brins profilés (7, 8) étant réalisé sous forme de brin sans fin, les deux brins profilés (7, 8), dans la zone de guidage (9) pour les corps cylindriques (2), s'étendant parallèlement l'un à l'autre et étant agencés avec un espace intermédiaire (10) entre eux, et sur les deux brins profilés (7, 8), sur le côté (16, 20) de l'enveloppe dirigé vers l'espace intermédiaire (10), est réalisée respectivement une rainure de guidage (11, 13), qui s'étend parallèlement à l'axe longitudinal du brin profilé (7, 8), des zones partielles des collerettes (5) des corps cylindriques (2) pouvant être immobilisées dans ces deux rainures (11, 13), **caractérisé en ce que**
la section transversale des brins profilés (7, 8) est de configuration symétrique,
sur au moins deux côtés mutuellement opposés est agencée respectivement une rainure (11, 12 ; 13, 14),
les rainures (12, 14) orientées de manière à s'éloigner de l'espace intermédiaire (10) vers l'extérieur, coopèrent avec des poulies ou galets de renvoi (26),
ces poulies de renvoi (26) présentent sur leur enveloppe périphérique, une collerette radiale (29), et
cette collerette (29) s'engage partiellement dans lesdites rainures (12, 14).

2. Organe convoyeur pour corps cylindriques (2) selon la revendication 1, **caractérisé en ce que** les brins profilés (7, 8) présentent une section transversale sensiblement carrée, et une rainure est réalisée sur chacune des quatre surfaces latérales (16-19 ; 20-23).

3. Organe convoyeur pour corps cylindriques (2) selon l'une des revendications 1 à 2, **caractérisé en ce que** les brins profilés (7, 8) sont réalisés en un matériau élastique.

4. Organe convoyeur pour corps cylindriques (2) selon l'une des revendications 1 à 3, **caractérisé en ce que** les brins profilés (7, 8) présentent une âme (15) orientée longitudinalement, pour assurer une décharge de traction.

5. Organe convoyeur pour corps cylindriques (2) selon l'une des revendications 1 à 4, **caractérisé en ce que** les corps cylindriques (2) sont maintenus dans l'espace intermédiaire (10) entre les deux brins profilés (7, 8), et une zone partielle de la collerette (5) des corps cylindriques (2) s'engage dans les rainures (11, 13) des brins profilés (7, 8), tout comme une zone partielle (24) des corps cylindriques (2), qui avoisine la collerette (5), est maintenue entre des surfaces latérales opposées (16, 20) des brins profilés (7, 8).

6. Organe convoyeur pour corps cylindriques (2) selon l'une des revendications 1 à 5, **caractérisé en ce que** les brins profilés (7, 8) sont guidés, dans des secteurs partiels de l'organe convoyeur (1), dans des profilés de guidage (30, 31), qui constituent d'autres éléments de guidage.

7. Organe convoyeur pour corps cylindriques (2) selon l'une des revendications 1 à 6, **caractérisé en ce qu'**autour des brins profilés (7, 8) est agencé un dispositif de réglage (37) pour les éléments de guidage (26, 27, 30, 31) des brins profilés (7, 8), et **en ce qu'**au moyen de ce dispositif (37), les éléments de guidage (26, 27, 30, 31), et ainsi les brins profilés (7, 8), peuvent être déplacés par coulissement transversalement à la direction d'axe (25) des ébauches ou préformes (2).

8. Organe convoyeur pour corps cylindriques (2) selon l'une des revendications 1 à 7, **caractérisé en ce que** dans un secteur partiel de l'organe convoyeur (1), l'espace intermédiaire (10) entre les brins profilés (7, 8) est agrandi en vue d'éjecter des corps cylindriques (2) défectueux hors de l'organe convoyeur (1).

9. Organe convoyeur pour corps cylindriques (2) selon la revendication 6, **caractérisé en ce que** les profilés de guidage (30, 31) sont supportés de manière élastique par ressort.

10. Organe convoyeur pour corps cylindriques (2) selon la revendication 6, **caractérisé en ce que** dans les profilés de guidage (30, 31) sont agencés des galets d'appui (35, 36) rotatifs, et les brins profilés (7, 8) s'appuient, de leur côté (17, 21) éloigné de l'espace intermédiaire (10), contre ces galets d'appui (35, 36).

11. Organe convoyeur pour corps cylindriques (2) selon la revendication 3, **caractérisé en ce que** le matériau élastique est une matière plastique du groupe des polyuréthannes.

12. Parcours de transport automatique (43) pour le convoyage ou le transport de corps cylindriques (2) tels que des ébauches ou préformes, qui présentent au moins une collerette (5), entre un dispositif d'alimentation (38, 39) pour des corps cylindriques (2) non ordonnés, et un dispositif de transfert (47) pour les corps cylindriques (2), l'ensemble comprenant au moins un dispositif auxiliaire (41, 42) pour le contrôle ou d'autres mesures de traitement sur les corps cylindriques (2), ce dispositif (41, 42) étant agencé entre le dispositif d'alimentation (38, 39) et le dispositif de transfert (47), et l'ensemble comprenant en outre un organe convoyeur (1) continu pour les ébauches ou préformes (2), qui comporte deux brins profilés (7, 8) flexibles, en révolution, **caractérisé en ce que**
les brins profilés (7, 8) de l'organe convoyeur (1) présentent, sur au moins deux côtés mutuellement opposés, respectivement une rainure (11, 12 ; 13, 14), et ne sont pas interrompus dans la zone du dispositif auxiliaire ou des dispositifs auxiliaires (41, 42),
les rainures (12, 14) orientées de manière à s'éloigner de l'espace intermédiaire (10) vers l'extérieur, coopèrent avec des poulies ou galets de renvoi (26),
ces poulies de renvoi (26) présentent sur leur enveloppe périphérique, une collerette radiale (29), et cette collerette (29) s'engage partiellement dans lesdites rainures (12, 14),
l'organe convoyeur (1) s'étend horizontalement, verticalement et/ou de manière inclinée, et les corps cylindriques (2) étant ici toujours enserrés dans la même position et le même état ou les mêmes conditions par rapport à l'organe convoyeur (1), et
l'organe convoyeur (1) forme simultanément le dispositif de positionnement pour les ébauches ou préformes (2) dans au moins un dispositif auxiliaire (41, 42).

13. Parcours de transport automatique (43) selon la revendication 12, **caractérisé en ce que** le dispositif auxiliaire (41, 42) est agencé en tant que dispositif annexe rapporté par rapport à l'élément convoyeur (1).

14. Parcours de transport automatique (43) selon la revendication 12 ou la revendication 13, **caractérisé en ce que** le dispositif auxiliaire (41, 42) ne présente pas de dispositifs de positionnement supplémentaires pour les corps cylindriques (2).

15. Parcours de transport automatique (43) selon l'une des revendications 12 à 14, **caractérisé en ce que** l'organe convoyeur (1) forme, entre le dispositif d'alimentation (38, 39) et le dispositif de transfert (47), un parcours de convoyage ou de transport continu, sans interruption, et ce parcours de transport ne présente pas d'espaces d'accumulation pour les corps cylindriques (2).

16. Parcours de transport automatique (43) selon l'une des revendications 12 à 15, **caractérisé en ce que** les corps cylindriques (2) sont immobilisés dans l'organe convoyeur (1), dans la position correcte et avec un espacement réciproque prédéterminé.

17. Parcours de transport automatique (43) selon l'une des revendications 12 à 16, **caractérisé en ce que** les deux brins profilés (7, 8) flexibles de l'organe convoyeur (1) sont réalisés chacun en tant que brin sans fin, en révolution, et les brins (7, 8) sont, dans la zone du parcours de transport (43) formé par l'organe convoyeur (1) pour les corps cylindriques (2), agencés de manière parallèle l'un à l'autre et avec un espace intermédiaire (10) entre eux, les corps cylindriques (2) étant positionnés et maintenus dans cet espace intermédiaire (10).

18. Parcours de transport automatique (43) selon l'une des revendications 12 à 17, **caractérisé en ce que** l'organe convoyeur (1) est agencé dans un dispositif de réglage (37), et ce dispositif de réglage (37) comporte des moyens pour déplacer par coulissement les deux brins (7, 8) en révolution, transversalement à la direction d'axe (25) des corps cylindriques (2).
